(19) 

**Europäisches Patentamt**
**European Patent Office**
**Office européen des brevets**

(11) **EP 4 726 739 A1**

(12) **EUROPEAN PATENT APPLICATION**
published in accordance with Art. 153(4) EPC

(43) Date of publication:
**15.04.2026 Bulletin 2026/16**

(21) Application number: **24818233.9**

(22) Date of filing: **19.01.2024**

(51) International Patent Classification (IPC):
*G21C 19/04* (2006.01)   *G21C 15/18* (2006.01)

(52) Cooperative Patent Classification (CPC):
Y02E 30/30

(86) International application number:
**PCT/CN2024/073147**

(87) International publication number:
**WO 2024/250695 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 CN 202310667430**

(71) Applicant: **Shanghai Nuclear Engineering
Research &
Design Institute Co., Ltd.
Shanghai 200233 (CN)**

(72) Inventors:
• **ZHENG, Mingguang**
  **Shanghai 200233 (CN)**
• **LU, Hongzao**
  **Shanghai 200233 (CN)**
• **YAN, Jinquan**
  **Shanghai 200233 (CN)**
• **LIN, Shaoxuan**
  **Shanghai 200233 (CN)**

• **ZHANG, Wei**
  **Shanghai 200233 (CN)**
• **CHEN, Yuqing**
  **Shanghai 200233 (CN)**
• **SHAO, Changlei**
  **Shanghai 200233 (CN)**
• **WU, Jianbang**
  **Shanghai 200233 (CN)**
• **HUANG, Lei**
  **Shanghai 200233 (CN)**
• **TANG, Lichen**
  **Shanghai 200233 (CN)**
• **DING, Zonghua**
  **Shanghai 200233 (CN)**
• **ZHOU, Quan**
  **Shanghai 200233 (CN)**
• **XUE, Guohong**
  **Shanghai 200233 (CN)**

(74) Representative: **Rebbereh, Cornelia
Kölner Straße 18
51789 Lindlar (DE)**

(54) **NUCLEAR REACTOR, REACTOR INTERNAL, AND METHOD FOR DESIGNING SAME**

(57)    Reactor internals of a nuclear reactor, a nuclear reactor and a method for designing reactor internals. The reactor internals (30) comprise a core upper plate (1), a guide cylinder assembly (2), and a supporting column assembly (4). A plurality of flow holes (11) through which fluids are enabled to pass are provided in the core upper plate (1). The plurality of flow holes (11) comprise a first circular flow hole (111), a second circular flow hole (112) and a square flow hole (113). The guide cylinder assembly (2) is arranged above the square flow hole (113). The supporting column assembly (4) is installed above the first circular flow hole (111). In this way, the cross flow between flow channels can be effectively reduced, the abrasion between a control rod (3) and the guide cylinder assembly (2) is relieved, and the economy and safety of the nuclear reactor (100) are improved.

**(Cont. next page)**

EP 4 726 739 A1

**FIG. 2**

## Description

### CROSS-REFERENCE TO RELATED APPLICATION

This application claims the priority of the Chinese patent application No. 202310667430.8, filed on June 6, 2023 and entitled "Reactor internals with highly uniform core outlet flow and Method for designing the same", which is incorporated herein by reference in its entirety.

### TECHNICAL FIELD

The present invention relates to the technical field of nuclear reactor design, and in particular to a nuclear reactor, reactor internals and a method for designing the same.

### BACKGROUND

When designing a body structure of a reactor, it is important to ensure the uniformity of coolant flow distribution in each flow channel at the core inlet, and this uniformity index is significant in terms of both economy and safety. Uneven coolant flow distribution at the core inlet leads to cross flow in a fuel assembly, causing flow-induced vibration of the fuel assembly and abrasion of a cladding tube of a fuel rod.

High uniformity of coolant flow at the core inlet helps to balance power distribution in the core, thereby improving the availability of the reactor, reducing flow-induced vibration of the fuel assembly, and avoiding boiling caused by local overheating of the core. In terms of quantification, when designing a reactor structure, it is generally required that the difference in coolant inlet flow of fuel assemblies in the core is within 10%. In order to meet this uniformity requirement for the core inlet flow, a variety of solutions are adopted in the design of different types of reactors, such as adjusting a depth of a lower chamber of the reactor pressure vessel, adding a flow distribution device, optimizing a size of the core inlet opening, etc., all for the purpose of achieving the requirement of uniform distribution of the coolant flow at the core inlet.

However, uniform coolant flow distribution at the core outlet is generally not explicitly required in previous designs for the body structure of a reactor, and as its importance is considered low and it is not thought to have a significant impact on the reliability and economy of reactor operation.

The inventors have found that poor uniformity in coolant flow distribution at the core outlet negatively impacts on the long-term stable operation of the reactor. Uneven coolant flow distribution at the core outlet causes large cross flow in a region at the core outlet, which complicates the flow field in this region and leads to large flow-induced vibrations in the guide cylinder assembly and the control rod in this region, and the vibrations aggravate abrasion between the guide cylinder assembly and the control rod. If the abrasion is severe, the service life of the guide cylinder assembly and the control rod will be greatly shortened, requiring them to be replaced in advance, which will affect the safety and economy of the power plant.

### SUMMARY

In view of the deficiencies in the prior art, the present invention is to provide reactor internals of a nuclear reactor, a nuclear reactor and a method for designing the reactor internals, in which the structure of the flow holes in the core upper plate and the supporting column assembly in the reactor internals is designed to realize the uniform distribution of the core outlet flow, effectively reduce the cross flow between flow channels, relieve the abrasion between the control rod and the guide cylinder, and solve the problem of poor uniformity of the coolant flow distribution at existing core outlets.

A first aspect of the present invention is to provide reactor internals of a nuclear reactor, including: a core upper plate; a guide cylinder assembly; and a supporting column assembly, wherein a plurality of flow holes through which fluids are enabled to pass are provided in the core upper plate, and the plurality of flow holes include a first circular flow hole, a second circular flow hole and a square flow hole, the guide cylinder assembly being arranged above the square flow hole, and the supporting column assembly being installed above the first circular flow hole.

Preferably, an area ratio of the square flow hole to each of the first circular flow hole and the second circular flow hole is between 1.1:1 to 1.3:1.

Preferably, a thickness of the core upper plate is between 50 mm to 100 mm.

Preferably, a diameter of each of the first circular flow hole and the second circular flow hole is between 165 mm to 175 mm.

Preferably, four corners of the square flow hole are first rounded corners, a side length of the square flow hole is between 165 mm to 175 mm, and a radius of the first rounded corner is between 35 mm to 45 mm.

Preferably, the supporting column assembly includes a supporting column base, the supporting column base includes a base body installed above the first circular flow hole and four feet installed around the first circular flow hole, and each of the four feet is provided with a cylindrical surface along a circumferential direction of the first circular flow hole on a side of the foot facing the first circular flow hole and is provided with a second rounded corner at a joint between the foot and the base body.

Preferably, a diameter of the cylindrical surface is between 160 mm to 170 mm, and a radius of the second rounded corner is between 5 mm to 20 mm.

A second aspect of the present invention is to provide a nuclear reactor, including: a pressure vessel, and a fuel assembly and reactor internals both arranged inside the pressure vessel, wherein the reactor internals include a core upper plate, a guide cylinder assembly and a supporting column assembly;

a plurality of flow holes through which fluids are enabled to pass are provided in the core upper plate, and the plurality of flow holes include a first circular flow hole, a second circular flow hole and a square flow hole, the guide cylinder assembly being arranged above the square flow hole, and the supporting column assembly being installed above the first circular flow hole; and an upper tube seat of the fuel assembly is arranged below the core upper plate, and the fuel assembly is arranged below the upper tube seat of the fuel assembly.

A third aspect of the present invention is to provide a method for designing reactor internals of a nuclear reactor, wherein the nuclear reactor includes a pressure vessel and a fuel assembly and reactor internals both arranged inside the pressure vessel, and the reactor internals include a core upper plate, a guide cylinder assembly, and a supporting column assembly;

a plurality of flow holes through which fluids are enabled to pass are provided in the core upper plate, and the plurality of flow holes include a first circular flow hole, a second circular flow hole and a square flow hole, the guide cylinder assembly being arranged above the square flow hole, and the supporting column assembly being installed above the first circular flow hole; and

an upper tube seat of the fuel assembly is arranged below the core upper plate, and the fuel assembly is arranged below the upper tube seat of the fuel assembly,

the method for designing the reactor internals of a nuclear reactor including the following steps:

step S1, calculating a resistance coefficient of each flow hole according to a flow area of each flow hole;
step S2, calculating a flow distribution factor of each flow hole according to the calculated resistance coefficient and the flow area;
step S3, iteratively adjusting a size of each flow hole until a requirement for the flow distribution factor is met;
step S4, establishing a three-dimensional computational fluid dynamics analysis model based on each flow hole, the guide cylinder assembly and the supporting column assembly;
step S5, performing flow field calculation for the three-dimensional computational fluid dynamics analysis model to obtain a flow distribution factor of each flow hole and a cross flow rate of a region at the upper tube seat of the fuel assembly; and
step S6, iteratively adjusting the size of each flow hole and a structure of the supporting column assembly until the flow distribution factor and the cross flow rate of the region at the upper tube seat of the fuel assembly meet design requirements.

Preferably, following formula is adopted to calculate the resistance coefficient of each flow hole in step S1:

$$k = \left( k_0 + a\frac{L}{D} \right)\left( \frac{F_1}{F_0} \right)^2$$

$$k_0 = \left( 0.5 + 0.15\sqrt{1 - \frac{F_0}{F_1}} \right)\left( 1 - \frac{F_0}{F_1} \right) + \left( 1 - \frac{F_0}{F_1} \right)^2$$

$$a = \frac{1}{\left( 1.8\lg(\mathrm{Re}) - 1.64 \right)^2}$$

wherein $k$ is the resistance coefficient, $k_0$ is a local resistance coefficient, $a$ is a spatial resistance coefficient, Re is the Reynolds number, $L$ is a thickness of the core upper plate, $D$ is a diameter of the flow hole, $F_0$ is a flow area in the hole, and $F_1$ is an area of an opening region.

Preferably, following formula is adopted to calculate the flow distribution factor of each flow hole in step S2:

$$m_1 : m_2 : m_3 : m_4 = \frac{A_1}{\sqrt{k_1}} : \frac{A_2}{\sqrt{k_2}} : \frac{A_3}{\sqrt{k_3}} : \frac{A_4}{\sqrt{k_4}}$$

$$f_1 = \frac{m_1}{m_1 + m_2 + m_3 + m_4}$$

$$f_2 = \frac{m_2}{m_1 + m_2 + m_3 + m_4}$$

$$f_3 = \frac{m_3}{m_1 + m_2 + m_3 + m_4}$$

$$f_4 = \frac{m_4}{m_1 + m_2 + m_3 + m_4}$$

wherein $m_1$ to $m_4$ are flow ratios of respective flow holes in a 2×2 square matrix, $A_1$ to $A_4$ are flow areas of respective flow holes, $k_1$ to $k_4$ are resistance coefficients of respective flow holes, and $f_1$ to $f_4$ are flow distribution factors of respective flow holes.

By the reactor internals with highly uniform core outlet flow and the method for designing the same proposed in the present invention, the size of the flow hole in the core upper plate and the structure of the supporting column assembly can be reasonably calculated and designed, the cross flow between flow channels can be effectively reduced, the abrasion between the control rod and the guide cylinder assembly can be relieved, and the economy and safety of the nuclear reactor can be improved.

## BRIEF DESCRIPTION OF THE DRAWINGS

In order to illustrate the technical solutions of the embodiments of the present application more clearly, the accompanying drawing used in the embodiments of the present application will be briefly introduced below.

FIG. 1 is a schematic diagram of a nuclear reactor according to an embodiment of the present invention;
FIG. 2 is a schematic diagram of a partially enlarged structure of a core upper plate according to one or more embodiments of the present invention;
FIG. 3 is a schematic structural diagram of a supporting column assembly according to one or more embodiments of the present invention;
FIG. 4 is a schematic diagram of a design flowchart of reactor internals according to one or more embodiments of the present invention.

Reference signs:

100- Nuclear reactor;

10- Pressure vessel;
20- Fuel assembly;
21- Upper tube seat of fuel assembly;
30- Reactor internals;

1- Core upper plate;
11- Flow hole;

111- First circular flow hole;
112- Second circular flow hole;
113- Square flow hole;

2- Guide cylinder assembly;

3- Control rod;
4- Supporting column assembly;

41- Supporting column base;

411- Base body;
412- Foot;
413- Cylindrical surface;

42- Supporting column.

## DETAILED DESCRIPTION

In order to better understand the technical solutions of the present application, the embodiments of the present application will be described in detail below in conjunction with the accompanying drawings.

As introduced in the section of BACKGROUND, the uneven coolant flow distribution at the core outlet will cause large cross flow in a region at the core outlet, which complicates the flow field in this region and causes large flow-induced vibrations in the guide cylinder assembly and the control rod in this region, and the vibrations aggravate abrasion between the guide cylinder assembly and the control rod. If the abrasion is severe, the service life of the guide cylinder assembly and the control rod will be greatly shortened, requiring them to be replaced in advance, which will affect the safety and economy of the power plant. In order to solve the above technical problems, the present invention proposes reactor internals with highly uniform core outlet flow and a method for designing the same.

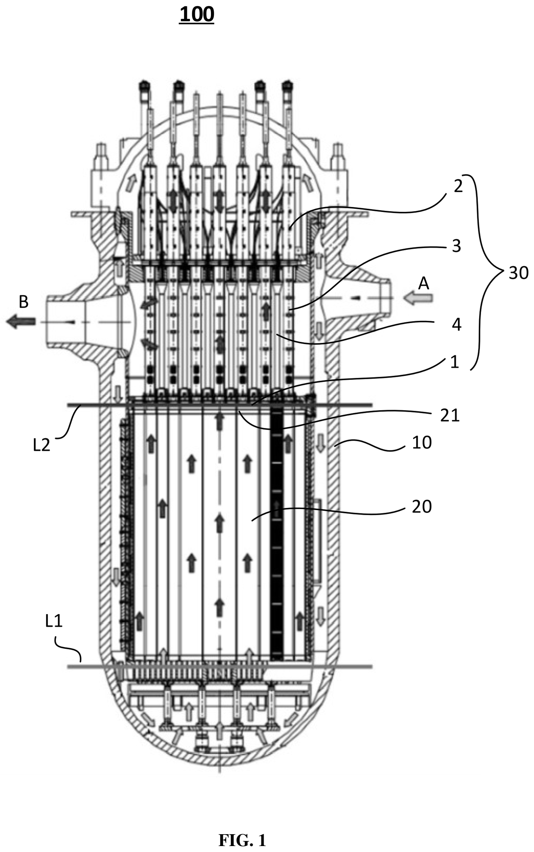

FIG. 1 is a schematic diagram of a nuclear reactor 100 according to an embodiment of the present invention.

As shown in FIG. 1, the nuclear reactor 100 of this embodiment includes a pressure vessel 10, and a fuel assembly 20 and reactor internals 30 arranged inside the pressure vessel 10.

The reactor internals 30 of the nuclear reactor 100 include a core upper plate 1, a guide cylinder assembly 2, a control rod 3 and a supporting column assembly 4. The control rod 3 is arranged inside the guide cylinder assembly 2 and can move inside the guide cylinder assembly 2. The supporting column assembly 4 and the guide cylinder assembly 2 are vertically arranged above the core upper plate 1, and the supporting column assembly 4 is arranged parallel to the guide cylinder assembly 2. The supporting column assembly 4 can support the reactor internals 30 above and press the core upper plate 1 and other internals below.

An upper tube seat 21 of fuel assembly is provided below the core upper plate 1, a fuel assembly 20 is arranged below the upper tube seat 21 of fuel assembly, and the upper end of the fuel assembly 20 is connected to the upper tube seat 21 of fuel assembly. The supporting column assembly 4 presses the core upper plate 1 against the fuel assembly 20, and the control rod 3 moves in the guide cylinder assembly 2 and can enter the fuel assembly 20 through the core upper plate 1.

The pressure vessel 10 is provided with a fluid inlet $A$ and a fluid outlet $B$. The fluid enters the pressure vessel 10 through the fluid inlet $A$ and flows in the direction of the arrow. Most of the fluid flows downwardly in the pressure vessel 10, flows to the core inlet $L1$, enters the fuel assembly 20, exchanges heat with the fuel assembly 20 and flows upward, flows out of the fuel assembly 20 from the core outlet $L2$, enters the reactor internals 30, and finally flows out of the pressure vessel 10 from the fluid outlet **B.** In FIG. 1, the horizontal line at the core inlet **L1** indicates the horizontal position of the fluid flowing into the fuel assembly 20 in the pressure vessel 10, which does not represent any component; and the horizontal line at the core outlet **L2** indicates the horizontal position of the fluid flowing out of the fuel assembly 20 in the pressure vessel 10, which does not represent any component.

Since the core upper plate 1 is provided at the core outlet **L2,** the core upper plate 1 hinders the fluid, resulting in uneven fluid flow distribution. The uneven fluid flow distribution causes large cross flow in a region at the core outlet **L2,** which complicates the flow field in this region and causes generation of large flow-induced vibrations in the guide cylinder assembly 2 and the control rod 3 in this region, and the vibrations aggravate the abrasion between the guide cylinder assembly 2 and the control rod 3. If the abrasion is serious, the service life of the guide cylinder assembly 2 and the control rod 3 will be greatly shortened.

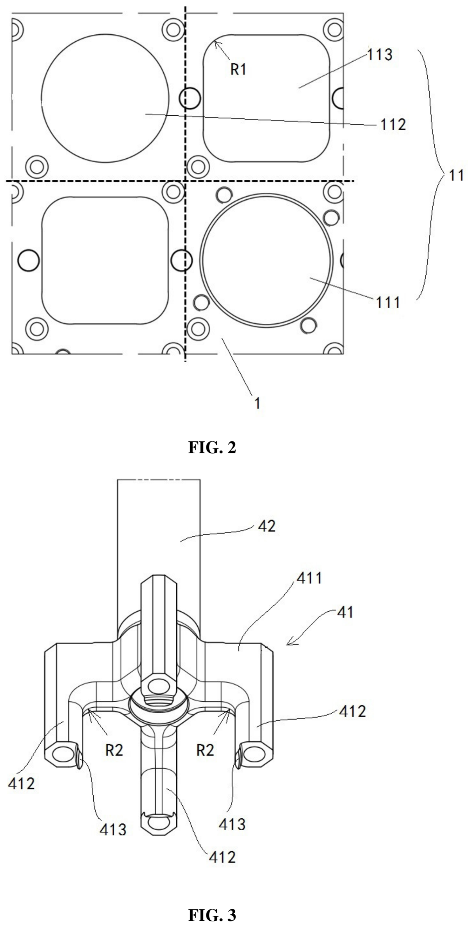

FIG. 2 is a schematic diagram of a partially enlarged structure of the core upper plate 1 according to one or more embodiments of the present invention.

As shown in FIG. 2, a plurality of flow holes 11 through which fluids are enabled to pass are provided in the core upper plate 1, and the plurality of flow holes 11 include a first circular flow hole 111, a second circular flow hole 112, and square flow holes 113. The plurality of flow holes 11 are arranged in a matrix, wherein each $2 \times 2$ square matrix includes one first circular flow hole 111, one second circular flow hole 112, and two square flow holes 113, the first circular flow hole 111 and the second circular flow hole 112 are arranged diagonally, and the two square flow holes 113 are arranged diagonally. The guide cylinder assembly 2 is arranged above the square flow hole 113, the supporting column assembly 4 is installed above the first circular flow hole 111, and no part is installed above the second circular flow hole 112.

The plurality of flow holes 11 are arranged in the core upper plate 1, and the flow holes 11 correspond to the components above the core upper plate 1, respectively, so that the obstruction of the core upper plate 1 to the fluid is reduced, the fluid can smoothly enter the portion above the core upper plate 1, which reduces the cross flow in the region at the core outlet L2 and reduces the risk of generation of flow-induced vibrations in the guide cylinder assembly 2 and the control rod 3 in the region, and thus reduces the abrasion between the guide cylinder assembly 2 and the control rod 3.

As an embodiment, the area ratio of the square flow hole 113 to each of the first circular flow hole 111 and the second circular flow hole 112 is between 1.1:1 to 1.3:1, preferably 1.2:1. The areas of the square flow holes 113 are the same; and the areas of the first circular flow hole 111 and the second circular flow hole 112 may be the same or different, but they should meet the requirements of the area ratio with the square flow hole 113.

By designing the sizes of the flow holes 11 of the core upper plate 1, the flow resistance values of the various flow channels composed of the core upper plate 1 and components above it are made similar, so as to balance the flow resistance at each place of the core outlet L2. In this way, the fluid flowing out of the core can be evenly distributed to the various flow channels, and the difference in the fluid outlet flow of respective fuel assemblies 20 in the core is within 10%, thereby achieving uniform distribution of the flow at the core outlet L2, meeting the allowable value of the distribution deviation of each flow channel, the maximum average flow and other indicators, effectively reducing the cross flow between flow channels, and slowing down the abrasion between the control rod 3 and the guide cylinder assembly 2.

The thickness of the core upper plate 1 is between 50 mm to 100 mm, which can ensure the strength of the core upper plate 1 after the flow holes 11 are formed.

The diameters of the first circular flow hole 111 and the second circular flow hole 112 are both between 165 mm to 175 mm.

The four corners of the square flow hole 113 are first rounded corners $R1$, the side length of the square flow hole 113 is between 165 mm to 175 mm, and the radius of the first rounded corner $R1$ is between 35 mm to 45 mm.

By designing the size of the flow holes 11, the size of each flow hole 11 is further limited, so as to meet the requirements of installing components above the flow holes 11, and to make the flow resistance values of respective flow channels composed of the core upper plate 1 and components above it similar, thereby balancing the flow resistance at each place of the core outlet L2.

FIG. 3 is a schematic structural diagram of the supporting column assembly 4 according to one or more embodiments of the present invention. In order to clearly show the structure of the supporting column assembly 4, FIG. 3 only shows a portion of a supporting column 42.

As shown in FIG. 3, the supporting column assembly 4 includes the supporting column 42 and a supporting column base 41. The supporting column base 41 includes a base body 411 installed above the first circular flow hole 111 and four feet 412 installed around the first circular flow hole 111. The four feet 412 are each provided with an arc-shaped cylindrical surface 413 along the circumferential direction of the first circular flow hole 111 on the side thereof facing the first circular flow hole 111, and are each provided with a second rounded corner R2 at the joint between the foot 412 and the base body 411.

As an embodiment, the cylindrical surfaces 413 of the four feet 412 extend to jointly form an inner cylindrical surface, the diameter of the inner cylindrical surface is between 160 mm~170 mm, and the radius of the second rounded corner R2 is between 5 mm ~ 20 mm. The diameter of the inner cylindrical surface formed by enclosure of the cylindrical surfaces 413 is substantially the same as the diameter of the corresponding first circular flow hole 111, and they jointly form a flow channel for the fluid, thereby reducing the resistance of the supporting column base 41 to the fluid; and the arrangement of the second rounded corner R2 is more conducive to the flow of the fluid, thereby further reducing the fluid resistance of the first circular flow hole 111 below the supporting column base 41.

A sealing head (not shown) is also provided at the lower center of the base body 411 to seal and protect the supporting column assembly 4, and various detection elements may be installed inside the sealing head.

The supporting column base 41 on the supporting column assembly 4 is designed to have a streamlined structure with a low flow resistance, so that the inner side surfaces of the four feet 412 of the supporting column base 41 form the cylindrical surface 413. The upper root of the foot 412 is rounded, and the diameter of the cylindrical surface 413 is limited, which further reduces the fluid resistance of the first circular flow hole 111 below the supporting column 42. Combined with the design of the sizes of the flow holes of the core upper plate 1, the overall resistance of the region at the core upper plate 1 is greatly reduced, which not only effectively reduces the cross flow between flow channels and slows down the abrasion between the control rod 3 and the guide cylinder assembly 2, but also increases the lift of the main pump for fluid, thereby improving the economy of the nuclear reactor 100.

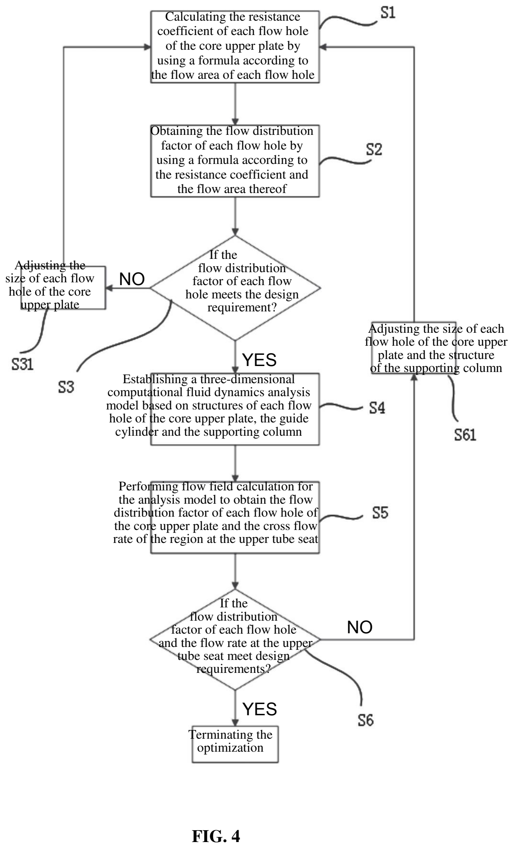

FIG. 4 is a schematic diagram of a design flowchart of the reactor internals 1 according to one or more embodiments of the present invention.

As shown in FIG. 4, the present invention further provides a method for designing the reactor internals 1 of the nuclear reactor 100. The reactor internals 1 is designed by the designing method which includes the following steps:

step S1, a resistance coefficient of each flow hole 11 of the core upper plate 1 is calculated according to a flow area of each flow hole 11;

step S2, a flow distribution factor of each flow hole 11 is calculated according to the calculated resistance coefficient and the flow area;

step S3, the size of each flow hole 11 is iteratively adjusted until a requirement for the flow distribution factor is met;

step S4, a three-dimensional computational fluid dynamics analysis model is established based on each flow hole 11, the guide cylinder assembly 2 and the supporting column assembly 4;

step S5, flow field calculation for the three-dimensional computational fluid dynamics analysis model is performed to obtain the flow distribution factor of each flow hole 11 and the cross flow rate of the region at the upper tube seat 21 of the fuel assembly;

Step S6, the size of each flow hole 11 and the structure of the supporting column assembly 4 is iteratively adjusted until the flow distribution factor and the cross flow rate of the region at the upper tube seat 21 of fuel assembly meet design requirements.

In step S1, the resistance coefficient of each flow hole 11 is calculated by adopting the following formula:

$$k = \left(k_0 + a\frac{L}{D}\right)\left(\frac{F_1}{F_0}\right)^2$$

$$k_0 = \left(0.5 + 0.15\sqrt{1 - \frac{F_0}{F_1}}\right)\left(1 - \frac{F_0}{F_1}\right) + \left(1 - \frac{F_0}{F_1}\right)^2$$

$$a = \frac{1}{\left(1.8\lg(\mathrm{Re}) - 1.64\right)^2} \tag{1}$$

In formula (1), $k$ is the resistance coefficient, $k_0$ is a local resistance coefficient, $a$ is a spatial resistance coefficient, Re is the Reynolds number; $L$ is the thickness of the core upper plate 1, D is the diameter of the flow hole 11, wherein the diameter $D$ of the square flow hole 113 is its hydraulic diameter; and $F_0$ is the flow area in the hole, and $F_1$ is the area of the opening region, which refers to the square area where the respective flow holes 11 separated by the dotted line are located as shown in FIG. 2.

First, the initial diameters $D$ of the square flow hole 113, the first circular flow hole 111 and the second circular flow hole 112 are set, and the flow areas $F_0$ in the respective holes are calculated according to the initial diameters $D$, then the calculated values are substituted into the resistance coefficient formula (1) to obtain the resistance coefficient $k$ under the initial diameter D.

In step S2, the flow distribution factor of each flow hole 11 is calculated by adopting the following formula:

$$m_1 : m_2 : m_3 : m_4 = \frac{A_1}{\sqrt{k_1}} : \frac{A_2}{\sqrt{k_2}} : \frac{A_3}{\sqrt{k_3}} : \frac{A_4}{\sqrt{k_4}}$$

$$f_1 = \frac{m_1}{m_1 + m_2 + m_3 + m_4}$$

$$f_2 = \frac{m_2}{m_1 + m_2 + m_3 + m_4}$$

$$f_3 = \frac{m_3}{m_1 + m_2 + m_3 + m_4}$$

$$f_4 = \frac{m_4}{m_1 + m_2 + m_3 + m_4} \tag{2}$$

In formula (2), $m_1$ to $m_4$ are flow ratios of respective flow holes in the $2\times2$ square matrix, $A_1$ to $A_4$ are flow areas of respective flow holes, $k_1$ to $k_4$ are resistance coefficients of respective flow holes, and $f_1$ to $f_4$ are flow distribution factors of respective flow holes 11.

For example, according to formula (1), the resistance coefficient $k_1$ of the first circular flow hole 111, the resistance coefficient $k_2$ of the second circular flow hole 112, and the resistance coefficients $k_3$ and $k_4$ of the two square flow holes 113 are calculated, and then these resistance coefficients $k$ and the corresponding flow areas $A_1$ to $A_4$ are substituted into formula (2), so that the flow distribution factors $f_1$ to $f_4$ of respective flow holes 11 can be obtained.

In step S3, the flow distribution factors $f_1$ to $f_4$ of respective flow holes 11 at the initial diameters D calculated in formula (2) are compared with the design requirements. If the design requirements are not met, step S31 is performed to adjust the size of each flow hole 11 of the core upper plate 1; then the process proceeds to step S1, and iterative calculation is performed by substituting the adjusted size of the flow hole 11 into formula (1) and formula (2), until flow distribution factors $f_1$ to $f_4$ meet the design requirements, after that, the process proceeds to step S4.

In step S4, the three-dimensional computational fluid dynamics analysis model is established according to the sizes of the respective flow holes 11 corresponding to the flow distribution factors $f_1$ to $f_4$ that meet the design requirements, as well as the sizes of the guide cylinder assembly 2 and the supporting column assembly 4.

A three-dimensional steady incompressible flow model is adopted, the turbulence model is implemented as the realizable k-e turbulence model, the wall is implemented with a no-slip boundary, and the boundary conditions are set as the mass flow inlet and the pressure outlet. In the calculation process, the residuals of mass, velocity, turbulent kinetic energy and turbulent dissipation rate, the pressure drop at the inlet and outlet, and the maximum velocity of the calculation domain are monitored. When the above-mentioned monitored quantities are stable and the fluctuation amplitude is no more than 1%, the calculation is considered to have converged.

In step S5, the flow field calculation results are post-processed to extract the flow of each flow hole 11, and the flow distribution factor of each flow hole 11 is obtained by formula (2). In addition, the cross flow field cloud map of the region at the upper tube seat 21 of fuel assembly is extracted to obtain the maximum value of the cross flow field.

In step S6, it is determined whether the result meets the design requirements. If not, the process proceeds to step S61, where the size of each flow hole 11 of the core upper plate 1 and the structure of the supporting column assembly 4 are modified; then the process proceeds to step S1, and iterative calculation is performed by substituting the adjusted size of the flow hole 11 into formula (1) and formula (2) and modeling is performed, until the flow distribution factor of each flow hole 11 and the cross flow field in the region at the upper tube seat 21 of fuel assembly meet the design requirements, after that, the optimization process is terminated.

Through the above iterative calculation process, it is obtained by calculation that the area ratio of the square flow hole 113 to each of the first circular flow hole 111 and the second circular flow hole 112 is between 1.1:1 to 1.3:1, preferably 1.2:1. In addition, the diameters of the first circular flow hole 111 and the second circular flow hole 112 are both between 165mm~175mm. The four corners of the square flow hole 113 are the first rounded corners $R1$, the side length of the square flow hole 113 is between 165mm~175mm, and the radius of the first rounded corner $R1$ is between 35mm~45mm.

By designing the size of the flow holes 11, the size of each flow hole 11 is further limited, which can meet the requirements of installing components above the flow holes 11, and can make the flow resistance values of respective flow channels composed of the core upper plate 1 and the guide cylinder assembly 2 and the supporting column assembly 4 above it similar, thereby balancing the flow resistance at each place of the core outlet L2.

By the reactor internals 30 with highly uniform core outlet flow and the method for designing the same according to the present invention, the size of the flow hole 11 of the core upper plate 1 and the structure of the supporting column assembly 4 can be reasonably calculated and designed, so as to effectively reduce the cross flow between flow channels, relieve the abrasion between the control rod 3 and the guide cylinder assembly 2, and improve the economy and safety of the nuclear reactor 100.

The above are only preferred embodiments of the application, and are not intended to limit the present application. For those skilled in the art, the present application may have various modifications and changes. Any modifications, equivalent replacements, improvements, etc. made within the spirit and principles of this application shall be included within the protection scope of this application.

**Claims**

1. Reactor internals of a nuclear reactor, comprising:

   a core upper plate;
   a guide cylinder assembly; and
   a supporting column assembly, wherein
   a plurality of flow holes through which fluids are enabled to pass are provided in the core upper plate, and the plurality of flow holes comprise a first circular flow hole, a second circular flow hole and a square flow hole, the guide cylinder assembly being arranged above the square flow hole, and the supporting column assembly being installed above the first circular flow hole.

2.  The reactor internals of a nuclear reactor according to claim 1, wherein an area ratio of the square flow hole to each of the first circular flow hole and the second circular flow hole is between 1.1:1 to 1.3:1.

3.  The reactor internals of a nuclear reactor according to claim 1, wherein a thickness of the core upper plate is between 50 mm to 100 mm.

4.  The reactor internals of a nuclear reactor according to claim 1, wherein a diameter of each of the first circular flow hole and the second circular flow hole is between 165 mm to 175 mm.

5.  The reactor internals of a nuclear reactor according to claim 1, wherein four corners of the square flow hole are first rounded corners, a side length of the square flow hole is between 165 mm to 175 mm, and a radius of the first rounded corner is between 35 mm to 45 mm.

6.  The reactor internals of a nuclear reactor according to claim 1, wherein the supporting column assembly comprises a supporting column base, the supporting column base comprises a base body installed above the first circular flow hole and four feet installed around the first circular flow hole, and each of the four feet is provided with an arc-shaped cylindrical surface along a circumferential direction of the first circular flow hole on a side of the foot facing the first circular flow hole and is provided with a second rounded corner at a joint between the foot and the base body.

7.  The reactor internals of the nuclear reactor according to claim 6, wherein a diameter of the cylindrical surface is between 160 mm to 170 mm, and radius of the second rounded corner is between 5 mm to 20 mm.

8.  A nuclear reactor, comprising:

    a pressure vessel, and a fuel assembly and reactor internals both arranged inside the pressure vessel, wherein the reactor internals comprise a core upper plate, a guide cylinder assembly and a supporting column assembly; a plurality of flow holes through which fluids are enabled to pass are provided in the core upper plate, and the plurality of flow holes comprise a first circular flow hole, a second circular flow hole and a square flow hole, the guide cylinder assembly being arranged above the square flow hole, and the supporting column assembly being installed above the first circular flow hole; and an upper tube seat of the fuel assembly is arranged below the core upper plate, and the fuel assembly is arranged below the upper tube seat of the fuel assembly.

9.  A method for designing reactor internals of a nuclear reactor, wherein the nuclear reactor comprises a pressure vessel and a fuel assembly and reactor internals both arranged inside the pressure vessel, and the reactor internals comprise a core upper plate, a guide cylinder assembly, and a supporting column assembly;

    a plurality of flow holes through which fluids are enabled to pass are provided in the core upper plate, and the plurality of flow holes comprise a first circular flow hole, a second circular flow hole and a square flow hole, the guide cylinder assembly being arranged above the square flow hole, and the supporting column assembly being installed above the first circular flow hole; and an upper tube seat of the fuel assembly is arranged below the core upper plate, and the fuel assembly is arranged below the upper tube seat of the fuel assembly, the method for designing the reactor internals of a nuclear reactor comprising the following steps:

    step S1, calculating a resistance coefficient of each flow hole according to a flow area of each flow hole; step S2, calculating a flow distribution factor of each flow hole according to the calculated resistance coefficient and the flow area; step S3, iteratively adjusting a size of each flow hole until a requirement for the flow distribution factor is met; step S4, establishing a three-dimensional computational fluid dynamics analysis model based on each flow hole, the guide cylinder assembly and the supporting column assembly; step S5, performing flow field calculation for the three-dimensional computational fluid dynamics analysis model to obtain a flow distribution factor of each flow hole and a cross flow rate of a region at the upper tube seat of the fuel assembly; and

step S6, iteratively adjusting the size of each flow hole and a structure of the supporting column assembly until the flow distribution factor and the cross flow rate of the region at the upper tube seat of the fuel assembly meet design requirements.

10. The method for designing the reactor internals of a nuclear reactor according to claim 9, wherein following formula is adopted to calculate the resistance coefficient of each flow hole in step S1:

$$k = \left( k_0 + a\frac{L}{D} \right)\left( \frac{F_1}{F_0} \right)^2$$

$$k_0 = \left( 0.5 + 0.15\sqrt{1 - \frac{F_0}{F_1}} \right)\left( 1 - \frac{F_0}{F_1} \right) + \left( 1 - \frac{F_0}{F_1} \right)^2$$

$$a = \frac{1}{\left( 1.8\lg(\mathrm{Re}) - 1.64 \right)^2}$$

wherein $k$ is the resistance coefficient, $k_0$ is a local resistance coefficient, $a$ is a spatial resistance coefficient, Re is the Reynolds number, $L$ is a thickness of the core upper plate, $D$ is a diameter of the flow hole, $F_0$ is a flow area in the hole, and $F_1$ is an area of an opening region.

11. The method for designing the reactor internals of a nuclear reactor according to claim 9, wherein following formula is adopted to calculate the flow distribution factor of each flow hole in step S2:

$$m_1 : m_2 : m_3 : m_4 = \frac{A_1}{\sqrt{k_1}} : \frac{A_2}{\sqrt{k_2}} : \frac{A_3}{\sqrt{k_3}} : \frac{A_4}{\sqrt{k_4}}$$

$$f_1 = \frac{m_1}{m_1 + m_2 + m_3 + m_4}$$

$$f_2 = \frac{m_2}{m_1 + m_2 + m_3 + m_4}$$

$$f_3 = \frac{m_3}{m_1 + m_2 + m_3 + m_4}$$

$$f_4 = \frac{m_4}{m_1 + m_2 + m_3 + m_4}$$

wherein $m_1$ to $m_4$ are flow ratios of respective flow holes in a 2×2 square matrix, $A_1$ to $A_4$ are flow areas of respective flow holes, $k_1$ to $k_4$ are resistance coefficients of respective flow holes, and $f_1$ to $f_4$ are flow distribution factors of respective flow holes.

**100**

**FIG. 1**

**FIG. 2**

**FIG. 3**

Calculating the resistance coefficient of each flow hole of the core upper plate by using a formula according to the flow area of each flow hole — S1

Obtaining the flow distribution factor of each flow hole by using a formula according to the resistance coefficient and the flow area thereof — S2

Adjusting the size of each flow hole of the core upper plate — S31

NO

If the flow distribution factor of each flow hole meets the design requirement? — S3

YES

Establishing a three-dimensional computational fluid dynamics analysis model based on structures of each flow hole of the core upper plate, the guide cylinder and the supporting column — S4

Adjusting the size of each flow hole of the core upper plate and the structure of the supporting column — S61

Performing flow field calculation for the analysis model to obtain the flow distribution factor of each flow hole of the core upper plate and the cross flow rate of the region at the upper tube seat — S5

If the flow distribution factor of each flow hole and the flow rate at the upper tube seat meet design requirements? — S6

NO

YES

Terminating the optimization

**FIG. 4**

## INTERNATIONAL SEARCH REPORT

International application No.

**PCT/CN2024/073147**

| A. | CLASSIFICATION OF SUBJECT MATTER |
|---|---|

G21C19/04(2006.01)i; G21C15/18(2006.01)i

According to International Patent Classification (IPC) or to both national classification and IPC

| B. | FIELDS SEARCHED |
|---|---|

Minimum documentation searched (classification system followed by classification symbols)

G21C19,G21C15 (IPC)

Documentation searched other than minimum documentation to the extent that such documents are included in the fields searched

Electronic data base consulted during the international search (name of data base and, where practicable, search terms used)

CNTXT, ENTXTC, DWPI, CNKI, 读秀, DUXIU: 反应堆, 堆内构件, 堆芯上板, 上堆芯板, 孔, 圆, 方, 阻力, 流量, 分配, reactor, inter component, upper core plate, hole, circular, square, resistance, flow distribut+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116487081 A (SHANGHAI NUCLEAR ENGINEERING RESEARCH & DESIGN INSTITUTE CO., LTD.) 25 July 2023 (2023-07-25) claims 1-10, description, paragraphs 0037-0071, and figures 1-4 | 1-11 |
| X | 叶奇蓁 等 (YE, Qizhen). "中国电气工程大典第6卷核能发电工程 (Non-official translation: China Electrical Engineering Canon, Vol.6, Nuclear Power Engineering)" 中国电力出版社 (China Electric Power Press), 31 July 2009 (2009-07-31), pages 317-318, section 2.3, structural description, and figure 2.4.3-figure 2.4.5 | 1-8 |
| X | 郑明光 等 (ZHENG, Mingguang et al.). "压水堆核电站工程设计 (Pressurized Water Reactor Nuclear Plant Engineering Design)" 上海科学出版社 (Shanghai Scientific & Technical Publishers), 31 January 2013 (2013-01-31), pages 99-101, and figures 4-32 and figures 4-33 | 1-8 |
| A | CN 103177780 A (SHANGHAI NUCLEAR ENGINEERING RESEARCH & DESIGN INSTITUTE) 26 June 2013 (2013-06-26) entire document | 1-11 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 April 2024** | **09 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/073147** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 108899098 A (CHINA GENERAL NUCLEAR POWER CO., LTD. et al.) 27 November 2018 (2018-11-27)<br>entire document | 1-11 |
| A | CN 103903656 A (NUCLEAR POWER INSTITUTE OF CHINA et al.) 02 July 2014 (2014-07-02)<br>entire document | 1-11 |
| A | CN 203026160 U (NUCLEAR POWER INSTITUTE OF CHINA) 26 June 2013 (2013-06-26)<br>entire document | 1-11 |
| A | JP 2014066582 A (NUCLEAR FUEL INDUSTRIES, LTD) 17 April 2014 (2014-04-17)<br>entire document | 1-11 |
| A | JP 2006194749 A (HITACHI, LTD.) 27 July 2006 (2006-07-27)<br>entire document | 1-11 |

Form PCT/ISA/210 (second sheet) (July 2022)

**INTERNATIONAL SEARCH REPORT**
Information on patent family members

International application No.

**PCT/CN2024/073147**

| Patent document cited in search report | | | Publication date (day/month/year) | Patent family member(s) | | | Publication date (day/month/year) |
|---|---|---|---|---|---|---|---|
| CN | 116487081 | A | 25 July 2023 | None | | | |
| CN | 103177780 | A | 26 June 2013 | None | | | |
| CN | 108899098 | A | 27 November 2018 | None | | | |
| CN | 103903656 | A | 02 July 2014 | None | | | |
| CN | 203026160 | U | 26 June 2013 | None | | | |
| JP | 2014066582 | A | 17 April 2014 | None | | | |
| JP | 2006194749 | A | 27 July 2006 | JP | 4521284 | B2 | 11 August 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310667430